# EUROPEAN PATENT APPLICATION

(11) **EP 3 989 509 A1**
(43) Date of publication of application: **27.04.2022**
(21) Application number: 20901004.0
(22) Date of filing: 01.12.2020
(51) Int. Cl.: H04L 29/12

(54) **METHOD FOR REALIZING NETWORK DYNAMICS, SYSTEM, TERMINAL DEVICE AND STORAGE MEDIUM**

(30) Priority: 20.12.2019 CN 201911330409
(71) Applicant: ZTE Corporation, Shenzhen, Guangdong 518057 (CN)
(72) Inventor: MA, Su'an, Shenzhen, Guangdong 518057 (CN)
(74) Representative: Raynor, Simon Mark
(86) International application number: PCT/CN2020/133138
(87) International publication number: WO 2021/121027

(57) **Abstract**

The present invention provides a method and system for realizing network dynamics, a terminal device, and a computer readable storage medium. The method includes: a domain name system request being sent to a security control center after a requester initiates the request to access a requestee; the security control center selecting an IP address from each of dynamic address pools of the requester and the requestee respectively as a dynamic source IP address and a dynamic destination IP address, and sending both the dynamic source IP address and the dynamic destination IP address to the security modules of the requester and the requestee; the security module of the requester changing a source address of a data packet generated by the requester to the dynamic source IP address, and sending the data packet to the security module of the requestee; and in response to verifying that the source address and the destination address of the data packet are respectively consistent with the dynamic source IP address and the dynamic destination IP address, the security module of the requestee forwarding the data packet to the requestee.

## Description

### CROSS REFERENCE TO RELATED INVENTIONS

The present invention claims the priority of Chinese Patent Application No. 201911330409.9 filed on December 20, 2019, which is incorporated by reference in its entirety.

### TECHNICAL FIELD

The present invention relates to the field of communication technologies, and more particularly, to a method and system for realizing network dynamics, a terminal device, and a computer readable storage medium.

### BACKGROUND

Cloud computing refers to a supercomputing mode based on the Internet, i.e., the computing originally in a local computer or a remote server is distributed on a large number of computers through the network to complete the cooperative work. Based on a virtualization technology, a cloud computing platform creates several virtual machines through a virtualization software on a physical machine, and also creates several virtual switches for the communication between the virtual machines and between the virtual machines and an external network. Each virtual machine is assigned an Internet protocol (IP) address, which is basically fixed once assigned and does not change for a period of time.

On the cloud computing platform, a hacker would first try to find the virtual machines on the network when making an attack. Because IP addresses of the virtual machines are relatively fixed, the hacker may discover the virtual machines in the network by scanning the virtual machines one by one, or may obtain data packets on the network by capturing the packets on the network, and determine which virtual machines are on the network through the IP addresses of the data packets. Once a new IP address of a virtual machine is discovered, the hacker launches a new round of attacks against that IP address.

Based on the help of mobile target defense, one of the defense methods on the cloud computing platform is to make the virtual machines' IP addresses dynamic, i.e., the IP addresses accessing the virtual machines are continuously changed, and a fixed IP address is not used to access the virtual machine. The hacker is unable to obtain dynamic IP addresses of the virtual machines and therefore cannot make the attack.

However, in the related technologies, a specific firewall needs to be set in front of the server first and meanwhile a domain name system (DNS) server needs to be modified to achieve the mobile target defense of making the virtual machines' IP addresses dynamic. Besides, only the servers within the firewall are able to be protected, and the virtual machines on the cloud computing platform are unable to be fully protected.

### SUMMARY

Embodiments of the present invention provide a method and system for realizing network dynamics, a terminal device, and a computer readable storage medium to provide a protection mechanism for realizing the network dynamics.

Some embodiments of the present invention provide a method for realizing network dynamics, including: a security module of a requester sending a domain name system request to a security control center after the requester initiates the domain name system request to access a requestee; the security control center selecting an IP address from each of a stored dynamic address pool corresponding to the requester and a stored dynamic address pool corresponding to the requestee respectively as a dynamic source IP address and a dynamic destination IP address according to the domain name system request, and sending both the dynamic source IP address and the dynamic destination IP address to the security module of the requester and to a security module of the requestee; the security module of the requester changing a source address of a data packet generated by the requester to the dynamic source IP address, and then sending the data packet to the security module of the requestee, wherein a destination address of the data packet is the dynamic destination IP address; and the security module of the requestee verifying whether the source address and the destination address of the data packet are respectively consistent with the dynamic source IP address and the dynamic destination IP address after receiving the data packet; in response to verifying that the source address and the destination address of the data packet are respectively consistent with the dynamic source IP address and the dynamic destination IP address, the security module of the requestee changing the destination address of the data packet to a real IP address of the requestee and forwarding the data packet to the requestee; and in response to verifying that the source address of the data packet is inconsistent with the dynamic source IP address or the destination address of the data packet is inconsistent with the dynamic destination IP address, the security module of the requestee discarding the data packet.

Some embodiments of the present invention provide a system for realizing network dynamics, including: a security control center and a security module; wherein the security module is configured to send a domain name system request to the security control center after a requester initiates the domain name system request to access a requestee; the security control center is configured to select an IP address from each of a stored dynamic address pool corresponding to the requester and a stored dynamic address pool corresponding to the requestee respectively as a dynamic source IP address and a dynamic destination IP address according to the domain name system request, and send both the dynamic source IP address and the dynamic destination IP address to the security module of the requester and to the security module of the requestee; the security module is further configured to: at the requester, change a source address of a data packet generated by the requester to the dynamic source IP address, and then send the data packet to the security module of the requestee, wherein a destination address of the data packet is the dynamic destination IP address; and at the requestee, verify whether the source address and the destination address of the data packet are respectively consistent with the dynamic source IP address and the dynamic destination IP address after receiving the data packet sent by the security module of the requester; in response to verifying that the source address and the destination address of the data packet are respectively consistent with the dynamic source IP address and the dynamic destination IP address, change the destination address of the data packet to a real IP address of the requestee and forward the data packet to the requestee; and in response to verifying that the source address of the data packet is inconsistent with the dynamic source IP address or the destination address of the data packet is inconsistent with the dynamic destination IP address, discard the data packet.

Some embodiments of the present invention provide a terminal device including a memory and a processor, wherein the memory stores a computer program which, when executed by the processor, causes the processor to perform the method for realizing network dynamics as described above.

Some embodiments of the present invention provide a computer program which, when executed by a processor, causes the processor to perform the method for realizing network dynamics as described above.

### BRIEF DESCRIPTION OF THE DRAWINGS

The accompanying drawings are intended to provide a further understanding of the technical solutions of the present invention, form a part of the specification, and explain the technical solutions of the present invention with reference to the embodiments of the present invention, which do not constitute a limitation to the technical solutions of the present invention.
FIG. 1 is a flowchart of a method for realizing network dynamics according to an embodiment of the present invention;
FIG. 2 is another flowchart of a method for realizing network dynamics according to an embodiment of the present invention;
FIG. 3 is a schematic diagram of a process in which DNS returns a dynamic IP address according to an embodiment of the present invention;
FIG. 4 is a schematic diagram of a network data packet sending process according to an embodiment of the present invention;
FIG. 5 is a schematic diagram of a network packet response process according to an embodiment of the present invention;
FIG. 6 is a schematic diagram of a process in which DNS returns a static IP address according to an embodiment of the present invention;
FIG. 7 is an architecture diagram of a system for realizing network dynamics according to an embodiment of the present invention;
FIG. 8 is another architectural diagram of a system for realizing network dynamics according to an embodiment of the present invention;
FIG. 9 is an architecture diagram of a security control center according to an embodiment of the present invention;
FIG. 10 is an architectural diagram of a security module according to an embodiment of the present invention;
FIG. 11 is an architectural diagram of a terminal device according to an embodiment of the present invention.
FIG. 12 is a still another flowchart of a method for realizing network dynamics according to another embodiment of the present invention.

### DETAILED DESCRIPTION

In order for those skilled in the art to better understand the technical solutions of the present invention, the following describes the present invention in further detail with reference to the accompanying drawings and embodiments. It should be understood that the specific embodiments described herein are provided only to illustrate and explain the present invention and are not provided to limit the present invention.

It should be noted that the embodiments of the present invention and the features in the embodiments may be arbitrarily combined with each other without conflict.

The terms used in the embodiments of the present invention are for the purpose of describing specific embodiments only and are not intended to limit the present invention. As used in this embodiment and appended claims, the terms "a", "the" and "said" in singular forms are also intended to include plural forms, unless the context clearly indicates otherwise.

In a cloud computing platform or local area network (LAN), network defense technologies generally include an anti-virus software technology, intrusion detection technology, data encryption technology, etc. However, due to the static topology information of existing networks, attackers often have enough time to analyze an internal network architecture and network address information, so as to penetrate the internal network gradually to attack a target. Most networks have a lot of public and private hosts able to be accessed externally even if firewalls are deployed, and all the networks lack effective defense against internal scanners. Once an attacker infiltrates the internal network, a topology of the network is able to be probed and attacked accordingly. Dynamic host configuration protocol (DHCP) or network address translation (NAT) is able to be used to dynamically assign IP addresses, but they are unable to be used to realize active defense because the changes of the IP addresses are infrequent and easily tracked.

A specific firewall needs to be set in front of a server first when using a mobile target defense technology to protect the server, and meanwhile, a domain name system (DNS) server needs to be modified. When a client accesses the server, the client first accesses the DNS server to obtain an IP address of the server. In this case, the DNS server interworks with the firewall in front of the server and assigns a dynamic IP address to the client. The client accesses the server through the firewall with the IP address as a destination address. The firewall only allows the client to use this IP address to interwork with the server, while other clients are unable to use this IP address to interwork with the server. However, the specific firewall needs to be set in front of the server first and meanwhile the DNS server needs to be modified to achieve the mobile target defense of making the virtual machines' IP addresses dynamic. Besides, only the servers within the firewall are able to be protected, and the virtual machines on the cloud computing platform are unable to be fully protected.

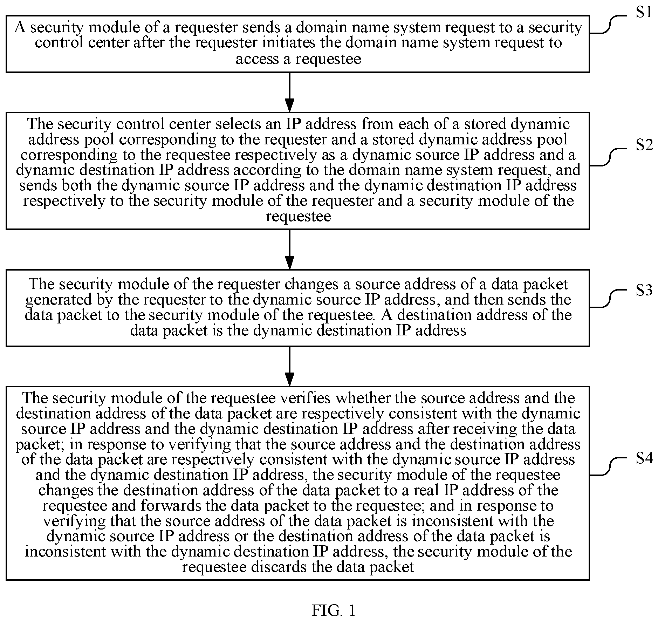

Therefore, as shown in FIG. 1, an embodiment of the present invention provides a method for realizing network dynamics, which includes operations S1 to S4.

In S1, a security module of a requester sends a domain name system request to a security control center after the requester initiates the domain name system request to access a requestee.

In S2: the security control center selects an IP address from each of a stored dynamic address pool corresponding to the requester and a stored dynamic address pool corresponding to the requestee respectively as a dynamic source IP address and a dynamic destination IP address according to the domain name system request, and sends both the dynamic source IP address and the dynamic destination IP address to the security module of the requester and to a security module of the requestee.

In S3, the security module of the requester changes a source address of a data packet generated by the requester to the dynamic source IP address, and then sends the data packet to the security module of the requestee. A destination address of the data packet is the dynamic destination IP address.

In S4, the security module of the requestee verifies whether the source address and the destination address of the data packet are respectively consistent with the dynamic source IP address and the dynamic destination IP address after receiving the data packet; in response to verifying that the source address and the destination address of the data packet are respectively consistent with the dynamic source IP address and the dynamic destination IP address, the security module of the requestee changes the destination address of the data packet to a real IP address of the requestee and forwards the data packet to the requestee; and in response to verifying that the source address of the data packet is inconsistent with the dynamic source IP address or the destination address of the data packet is inconsistent with the dynamic destination IP address, the security module of the requestee discards the data packet.

The cloud computing platform, also called a cloud platform, refers to services based on hardware and software resources, which provide computing, network and storage capabilities. The cloud computing platform generally create several virtual machines and a virtual switch on a physical host through virtualization software. The virtual switch is responsible for forwarding data packets to other virtual machines, or for interconnecting the data packets with a physical network card of the virtual switch so as to interconnect with an external network of the physical host. Each of the virtual machines has a real IP address that does not change frequently. In the embodiment of the present invention, each virtual machine on the cloud computing platform is provided with a security module, so that the network traffic of the virtual machine first passes through the security module and then accesses the virtual switch. Therefore, the security module is able to control all the network traffic of the virtual machine. The security module is able to be implemented by using a network filtering mechanism of an operating system kernel, or by modifying the virtual switch and running in the operating system kernel of the physical host.

Meanwhile, a unified security control center is set up on the cloud computing platform, and the security control center interworks with each security module to transmit various information. The security control center records an IP address and domain name of a virtual machine corresponding to each security module, while maintaining a dynamic IP address pool for each virtual machine. When one virtual machine accesses another virtual machine, the virtual machine initiating a request is a requester, also referred to as a client, and the accessed virtual machine is a requestee, also referred to as a server. The security module is called a client security module when it is at the requester end, and the security module is called a server security module when it is at the requestee end. For security, the IP address of the server is dynamic without a fixed IP address. Therefore, the client must first obtain the IP address by the domain name of the server through a DNS request.

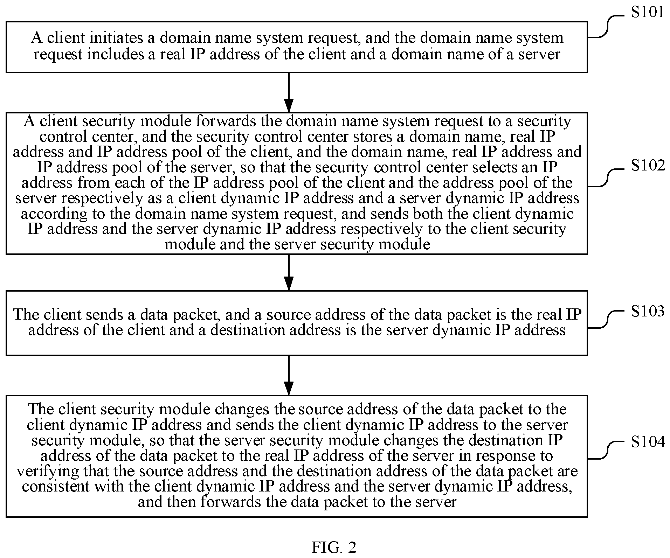

In an embodiment of the present embodiment, as shown in FIG. 2, a method for realizing network dynamics includes operations S101 to S104.

In S101, a client initiates a domain name system request, and the domain name system request includes a real IP address of the client and a domain name of a server.

In S102, a client security module forwards the domain name system request to a security control center, and the security control center stores a domain name, real IP address and IP address pool of the client, and the domain name, real IP address and IP address pool of the server, so that the security control center selects an IP address from each of the IP address pool of the client and the address pool of the server respectively as a client dynamic IP address and a server dynamic IP address according to the domain name system request, and sends both the client dynamic IP address and the server dynamic IP address to the client security module and to the server security module;
In S 103, the client sends a data packet, and a source address of the data packet is the real IP address of the client and a destination address is the server dynamic IP address.

In S104, the client security module changes the source address of the data packet to the client dynamic IP address and sends the client dynamic IP address to the server security module, so that the server security module changes the destination IP address of the data packet to the real IP address of the server in response to verifying that the source address and the destination address of the data packet are consistent with the client dynamic IP address and the server dynamic IP address, and then forwards the data packet to the server.

In the following embodiment, a virtual machine 1 is the client, a virtual machine 2 is the server, a security module 1 is the client security module, and a security module 2 is the server security module.

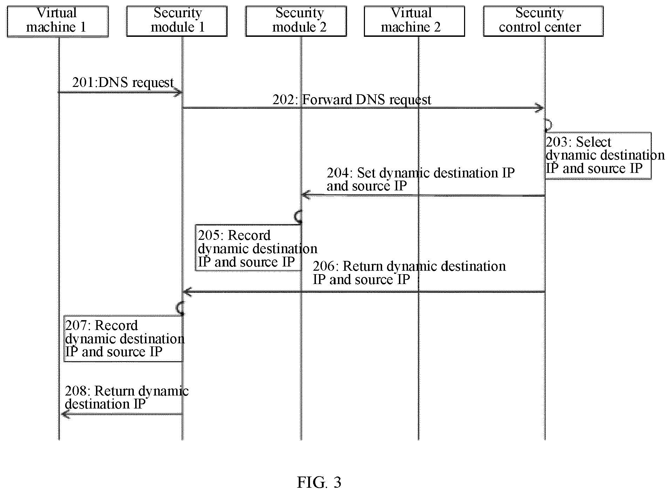

As shown in FIG. 3, FIG. 3 is a process in which DNS returns a dynamic IP address according to an embodiment of the present embodiment. Before the virtual machine 1 accesses the virtual machine 2, a process in which the virtual machine 1 sends a DNS request to obtain the dynamic IP address includes the following operations.

In 201, the virtual machine 1 has known a domain name of the virtual machine 2 and sends the DNS request to the DNS server to query an IP address of the virtual machine 2. The DNS request is obtained by the security module 1.

In 202, the security module 1 forwards the DNS request to the security control center after obtaining the DNS request.

In 203, the security control center queries an address pool of the virtual machine 2 according to the domain name in the DNS request, selects an IP address as a dynamic destination IP address from the address pool of the virtual machine 2, and selects an IP address as a dynamic source IP address from an address pool of the virtual machine 1.

In 204, the security control center sets the selected dynamic destination IP address and dynamic source IP address to the security module 2 corresponding to the virtual machine 2.

In 205, the security module 2 records the dynamic destination IP address and the dynamic source IP address.

In 206, the security control center returns the dynamic destination IP address and the dynamic source IP address to the security module 1.

In 207, the security module 1 records the dynamic destination IP address and the dynamic source IP address.

In 208, the security module 1 returns the dynamic destination IP address to the virtual machine 1.

In the above operations, the dynamic destination IP address is the server dynamic IP address, and the dynamic source IP address is the client dynamic IP address. After obtaining the server dynamic IP address, the virtual machine 1 serving as the client sends the data packet using the server dynamic IP address as the destination address, as shown in FIG. 3.

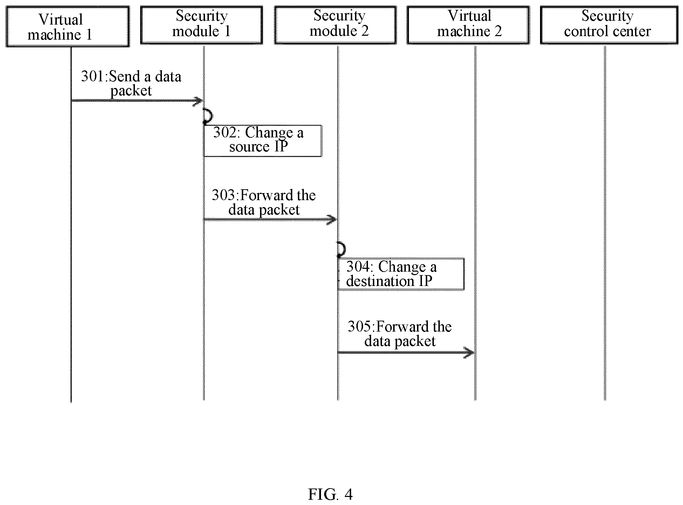

FIG. 4 shows a network data packet sending process according to an embodiment of the present embodiment. The process of the virtual machine 1 sending a data packet to the virtual machine 2 includes the following operations.

In 301, the virtual machine 1 sends a data packet, a source address is a real IP address of the virtual machine 1, and a destination address is a dynamic destination IP address of the virtual machine 2.

In 302, the security module 1 receives the data packet sent by the virtual machine 1, changes the source address to a dynamic source IP address of the virtual machine 1 sent by the security control center and recorded in the security module 1.

In 303, the security module 1 forwards the data packet of which the source address is changed to the virtual machine 2 according to the dynamic destination IP address, and the data packet is obtained by the security module 2.

In 304, the security module 2 receives the data packet sent by the virtual machine 1, and changes the destination address to a real IP address of the virtual machine 2.

In 305, the security module 2 forwards the data packet of which the destination address is changed to the virtual machine 2.

In this embodiment, the source address and the destination address are dynamically changed by the security module changing the IP address of the data packet, without any modification by the client and the server. Meanwhile, the security module verifies the source and destination addresses of the data packet and discards them if they are not the dynamic IP addresses assigned by the security control center, thereby preventing illegal access and ensuring security of network communication.

In another embodiment of the present embodiment, the method for realizing network dynamics further includes following operations.

The security module of the requester receives a response packet returned by the requestee and forwarded by the security module of the requestee, and a source address of the response packet is changed to the destination dynamic IP address by the security module of the requestee, and a destination address is the dynamic source IP address. And the security module of the requester changes the destination address of the response packet to a real IP address of the requester, and forwards the response packet of which the destination address is changed to the requester.

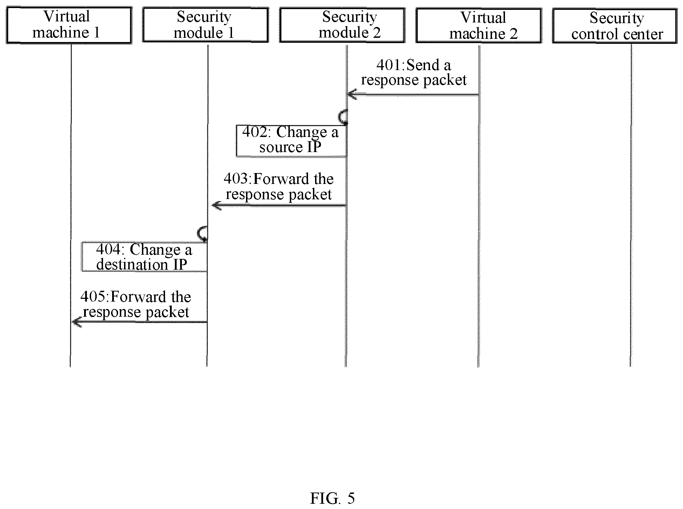

As shown in FIG. 5, FIG. 5 is a network packet response process according to an embodiment of the present embodiment. After receiving the data packet sent by the virtual machine 1, the virtual machine 2 needs to send a response packet to the virtual machine 1. The process of the virtual machine 2 sending the response packet to the virtual machine 1 includes the following operations.

In 401, the virtual machine 2 sends a response packet, a source address is a real IP address of the virtual machine 2, and a destination address is a dynamic source IP address of the virtual machine 1.

In 402, the security module 2 receives the response packet sent by the virtual machine 2, and changes the source address to the dynamic destination IP address of the virtual machine 2 sent by the security control center and recorded in the security module 2.

In 403, the security module 2 forwards the response packet of which the source address is changed to the virtual machine 1 according to the dynamic source IP address of the virtual machine 1, and the security module obtains the response packet of which the source address is changed.

In 404, the security module 1 receives the response packet sent by the virtual machine 2, and changes the destination address to a real IP address of the virtual machine 1.

In 405, the security module 1 forwards the data packet of which the destination address is changed to the virtual machine 1.

After the above operations, the virtual machine 1 receives the response packet of the virtual machine 2.

Preferably, after the security module 1 receives the response packet sent by the virtual machine 2, the method further includes the following operations. The security module 1 verifies the source address and the destination address of the response packet. In response to verifying that the source address and the destination address of the response packet are a dynamic IP address pair assigned by the security control center, the security module 1 changes the destination address of the response packet to the real IP address of the virtual machine 1 to send the response packet to the virtual machine 1; and in response to verifying that the source address and the destination address of the response packet are not the dynamic IP address pair assigned by the security control center, the security module 1 discards the response packet.

In another embodiment of present invention, the security control center is provided with a dynamic address pool table and a DNS processing module.

After receiving the DNS request sent by the client security module, the security control center queries an address pool of a server virtual machine corresponding to the domain name in the DNS request through the DNS processing module, assigns a dynamic destination IP address from the address pool of the server virtual machine, queries an address pool of a client virtual machine, assigns a dynamic source IP address from the address pool of the client virtual machine, returns this dynamic IP address pair to the client security module, and also sends this dynamic IP address pair to the server security module.

The security control center stores a dynamic IP address pool for each virtual machine through the dynamic address pool table, and each IP address in the dynamic IP address pool is able to be routed to its corresponding virtual machine.

After receiving the DNS request sent by the client security module, the security control center queries the address pool of the server virtual machine corresponding to the domain name in the DNS request through the DNS processing module, assigns a server dynamic IP address from the address pool of the server virtual machine, queries the address pool of the client virtual machine initiating the request, assigns a client dynamic IP address from the address pool of the client virtual machine, returns this dynamic IP address pair to the DNS requester, and also sends this dynamic IP address pair to a security module of a virtual machine corresponding to the domain name in the DNS request.

The security control center maintains a dynamic address pool table that contains dynamic address pools for all virtual machines on the cloud computing platform. When the security control center receives the DNS request forwarded by the security module, the security control center queries the dynamic address pool table. In response to the domain name in the request being queried, an IP address is selected from the address pool of the virtual machine corresponding to the domain name as the address returned by the DNS request. Meanwhile, the security control center also queries the address pool of the virtual machine that initiates the DNS request and selects an IP address. The security control center returns these two IP addresses to the virtual machine corresponding to the domain name in the DNS request. In addition, these two IP addresses are also sent to the security module corresponding to the server. A communication protocol between the security control center and the security module may be a customized private protocol.

In another embodiment of the present invention, the security module is provided with an address correspondence table and a forwarding control module.

The security module stores the client dynamic IP address and the server dynamic IP address assigned by the security control center through the address correspondence table;
The security module forwards the data packet sent by the client through the forwarding control module. Before forwarding the data packet sent by the client, the security module queries a server dynamic IP address consistent with the destination address of the data packet from the address correspondence table, and replaces the source address of the data packet with a client dynamic IP address corresponding to the server dynamic IP address in the address correspondence table.

The address correspondence table stores a dynamic address pair assigned by the security control center. The dynamic address pair is a pair of dynamic IP addresses assigned by the security control center when the security module sends a DNS request, one of the pair of dynamic IP addresses is a local dynamic IP address, and the other of the pair of dynamic IP addresses is a remote dynamic IP address. For the client security module, the local dynamic IP address is the client dynamic IP address sent by the security control center, and the remote dynamic IP address is the server dynamic IP address. For the server security module, the local dynamic IP address is the server dynamic IP address sent by the security control center, and the remote dynamic IP address is the client dynamic IP address.

The forwarding control module is responsible for forwarding data packets between the virtual machine and the virtual switch. When the virtual machine sends a data packet, the forwarding control module queries a remote dynamic IP address consistent with the destination address of the data packet from the address correspondence table, and replaces the source address of the data packet with the local dynamic IP address in this address pair. When the virtual switch sends a data packet to the virtual machine, the forwarding control module queries an address pair consistent with the source address and the destination address of the data packet from the address correspondence table, and replaces the destination address of the data packet with the real IP address of the virtual machine in response to the address pair consistent with the source address and the destination address of the data packet is queried, and discards the data packet in response to the address pair consistent with the source address and the destination address of the data packet is not queried.

In another embodiment of the present invention, after the requester initiates the domain name system request, the method further includes the following operations.

The security module of the requester determines whether a domain name in the domain name system request is an external domain name; in response to determining that the domain name in the domain name system request is the external domain name, the security module of the requester forwards the domain name system request to a server corresponding to a domain name system; and in response to determining that the domain name in the domain name system request is not the external domain name, the security module of the requester forwards the domain name system request to the security control center.

Since not all the DNS requests initiated by the virtual machine are for accessing the internal virtual machine and may be for accessing the external domain name, the security module is able to determine whether the domain name is the external domain name according to characteristics of the domain name. In response to the DNS request being a request accessing the external domain name, the security module does not need to forward the DNS request to the security control center, and the DNS request is forwarded in a form of a normal data packet.

In another embodiment of the present invention, after the security module of the requester forwards the DNS request to the security control center, the method further includes the following operations.

In response to receiving an external domain name indication command issued by the security control center, the security module of the requester forwards the domain name system request to a server corresponding to the domain name system. The external domain name indication command is issued when the security control center determines that a domain name of the server in the domain name system request is an external domain name.

After the virtual machine initiates the DNS request access, the security module forwards the DNS request to the security control center, and the security control center queries the domain name that the DNS request accesses from internal domain names. In response to the domain name that the DNS request accesses is not queried, the domain name that the DNS request accesses is considered as the external domain name, and the security control center returns an indication to the security module to request the security module to forward the DNS request in the form of the normal data packet.

In another embodiment of the present invention, after the security module of the requester forwards the DNS request to the security control center, the method further includes the following operations.

In response to receiving an indication command issued by the security control center that a server dynamic IP address is not required, the security module of the requester forwards the domain name system request to a server corresponding to a domain name system. The indication command that the server dynamic IP address is not required is issued when the security control center determines that a domain name of the server in the domain name system request is a domain name that does not need to be accessed through a dynamic IP address.

The security control center marks a domain name that is preset and internally recorded to indicate that the domain name does not need to be accessed through the dynamic IP address. After receiving the DNS request sent by the security module, the security control center returns an indication to the security module in response to the domain name corresponding to the DNS request being the marked domain name, to request the security module to forward the DNS request in the form of the normal data packet.

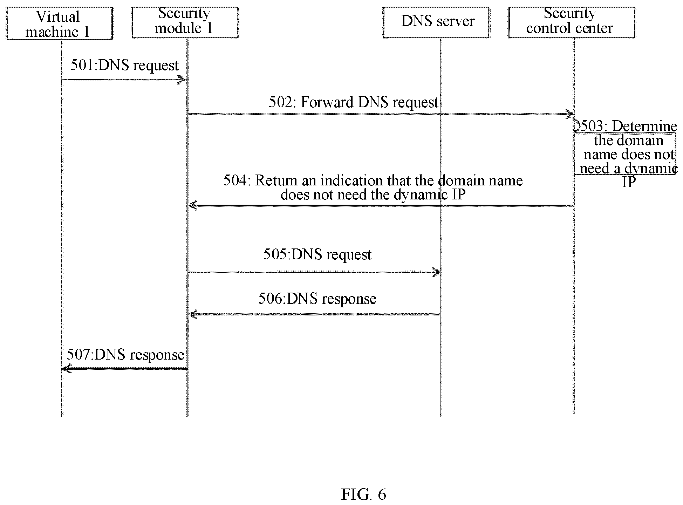

As shown in FIG. 6, FIG. 6 shows a process of the DNS returning a static IP address in which the virtual machine 1 accesses a certain host. If a domain name of the host is an external domain name, or even the domain name of the host is a domain name of an internal virtual machine but the dynamic IP address does not need to be assigned, the process includes the following operations.

In 501, the virtual machine 1 has known a domain name of a target host, sends a DNS request to a DNS server to query an IP address of the host. The DNS request is obtained by the security module 1.

In 502, the security module 1 forwards the DNS request to the security control center after obtaining the DNS request.

In 503, it is queried by the security control center according to the domain name in the DNS request that the host is an external host or is an internal virtual machine but marked as one to which the dynamic IP address does not need to be assigned.

In 504, the security control center returns a response to the security module 1, and the response includes an indication that the domain name does not need to be assigned the dynamic IP address.

In 505, the security module 1 forwards the DNS request to the DNS server based on a normal procedure.

In 506, the DNS server returns a response including a static IP address of the domain name.

In 507, the security module 1 forwards the DNS response to the virtual machine 1, and the virtual machine 1 obtains the static IP address of the domain name.

The security module forwards the DNS request in the form of the normal data packet, indicating that the data packet is sent according to an existing network transmission technology without changing the IP address in the data sending process.

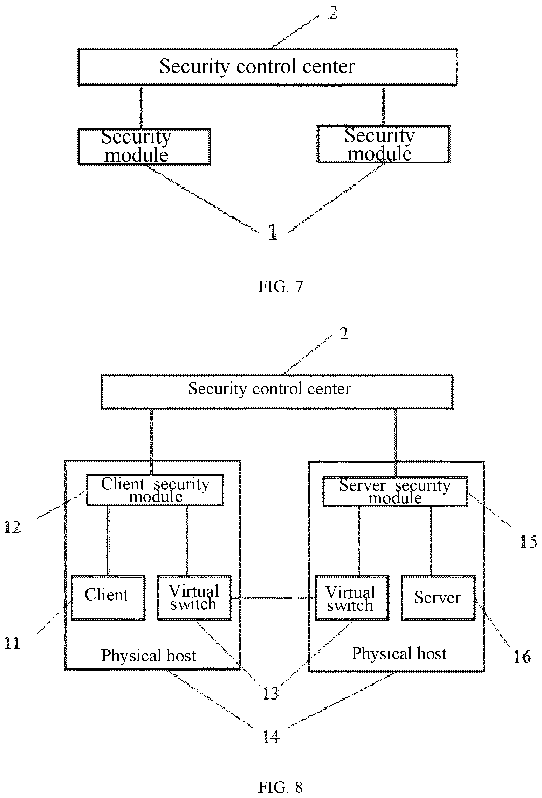

Based on the same technical concept, as shown in FIG. 7, an embodiment of the present invention further provides a system for realizing network dynamics, including a security control center 2 and a security module 1.

The security module 1 is configured to send a domain name system request to the security control center 2 after a requester initiates the domain name system request to access a requestee.

The security control center 2 is configured to select an IP address from each of a stored dynamic address pool corresponding to the requester and a stored dynamic address pool corresponding to the requestee respectively as a dynamic source IP address and a dynamic destination IP address according to the domain name system request, and send both the dynamic source IP address and the dynamic destination IP address to the security module of the requester and to the security module of the requestee.

The security module 1 is configured to, at the requester, change a source address of a data packet generated by the requester to the dynamic source IP address, and then send the data packet to the security module of the requestee. A destination address of the data packet is the dynamic destination IP address.

The security module 1 is configured to, at the requestee, verify whether the source address and the destination address of the data packet are respectively consistent with the dynamic source IP address and the dynamic destination IP address after receiving the data packet sent by the security module of the requester; in response to verifying that the source address and the destination address of the data packet are respectively consistent with the dynamic source IP address and the dynamic destination IP address, change the destination address of the data packet to a real IP address of the requestee and forward the data packet to the requestee; and in response to verifying that the source address of the data packet is inconsistent with the dynamic source IP address or the destination address of the data packet is inconsistent with the dynamic destination IP address, discard the data packet.

In another embodiment of the present invention, as shown in FIG. 8, a system for realizing network dynamics includes a security control center 2, a client security module 12, and a client 11. The security control center 2 stores a domain name, a real IP address and an IP address pool of the client, and a domain name, a real IP address and an IP address pool of the server.

The client 11 is configured to initiate a domain name system request, and the domain name system request includes the real IP address of the client and the domain name of the server.

The client security module 12 is configured to forward the domain name system request initiated by the client 11 to the security control center 2, so that the security control center 2 selects an IP address from each of the client IP address pool and the server IP address pool respectively as a client dynamic IP address and a server dynamic IP address according to the domain name system request, and sends both the client dynamic IP address and the server dynamic IP address to the client security module 12 and to a server security module 15.

The client 11 is further configured to send a data packet, a source address of the data packet is the real IP address of the client and a destination address is the server dynamic IP address.

The client security module 12 is further configured to change the source address of the data packet sent by the client 11 to the client dynamic IP address and send the data packet to the server security module 15, so that the server security module 15 forwards the data packet to a server 16 in response to verifying that the source address and the destination address of the data packet are respectively consistent with the client dynamic IP address and the server dynamic IP address.

As shown in FIG. 8, a virtual machine runs on a physical host 14 and is divided into a client 12 and a server 16 in one data access. The security module 1 runs in an operating system kernel of the physical host 14 and corresponds to the client and the server, and is respectively referred to as the client security module 12 and the server security module 15 when being at different ends. A virtual switch 13 also runs on the physical host 14. The virtual switch 13 is responsible for network interworking between virtual machines and interworking between the virtual machines and the external network of the physical host. All network traffic of the virtual machine is forwarded to the virtual switch 14 through the security module, and the virtual switch 14 then forwards the network traffic to other virtual machines or external networks. The security control center 2 interworks with all the security modules, receives the DNS request forwarded by the security module, returns a response message, and set various parameters for the security modules.

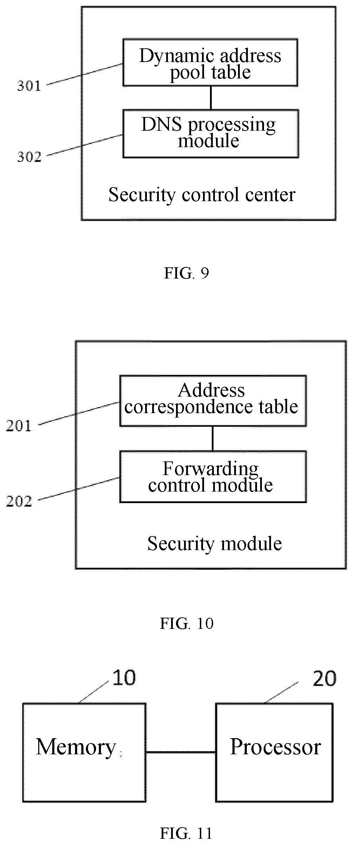

In an embodiment of the present invention, as shown in FIG. 9, the security control center 2 includes a dynamic address pool table 301 and a DNS processing module 302.

The dynamic address pool table 301 is configured to store a dynamic IP address pool for each virtual machine 11, and each IP address in the dynamic IP address pool is able to be routed to its corresponding virtual machine 11.

The DNS processing module 302 is configured to, after receiving the DNS request sent by the client security module 12, query an address pool of a virtual machine corresponding to the domain name in the DNS request, i.e., the address pool of the server 16, assign a server dynamic IP address from the address pool of the server 16, query an address pool of a virtual machine initiating the request, i.e., the address pool of the client 11, assign a client dynamic IP address from the address pool of the client 11, return this dynamic IP address pair to the DNS requester, i.e., the client 11, and also send this dynamic IP address pair to the server security module 15 corresponding to the domain name in the DNS request.

In an embodiment of the present invention, as shown in FIG. 10, the client security module 12 includes an address correspondence table 201 and a forwarding control module 202.

The address correspondence table 201 is configured to store a dynamic address pair assigned by the security control center 2.

The forwarding control module 202 is configured to forward data packets between the virtual machine and the virtual switch, query a server dynamic IP address corresponding to the destination address of the data packet from the address correspondence table 201 after receiving the data packet sent by the client 11, and replace the source address of the data packet with a client dynamic IP address corresponding to the server dynamic IP address in the address correspondence table.

In an embodiment of the present invention, the client security module 12 is further configured to determine whether a domain name of the server in the domain name system request is an external domain name after the client 11 initiates the domain name system request; in response to determining that the domain name of the server in the domain name system request is the external domain name, forward the domain name system request to a server corresponding to a domain name system; and in response to determining that the domain name of the server in the domain name system request is not the external domain name, forward the domain name system request to the security control center 2.

In an embodiment of the present invention, the client security module 12 is further configured to forward the domain name system request to a domain name system server in response to receiving an external domain name indication command issued by the security control center. The external domain name indication command is issued when the security control center determines that a domain name of the server in the domain name system request is an external domain name.

The client 11 initiates the DNS request access, the security control center 2 queries the domain name accessed by the DNS request from internal domain names after receiving the DNS request sent by the client security module 12. In response to the domain name accessed by the DNS request unable to be queried, it is considered that the domain name accessed by the DNS request is the external domain name, and an instruction is returned to the client security module 12 to request the client security module 12 to forward the DNS request in a form of a normal data packet.

In an embodiment of the present invention, the client security module 12 is further configured to forward the domain name system request to a domain name service system server in response to receiving an indication command issued by the security control center 2 that a server dynamic IP address is not required. The indication command that the server dynamic IP address is not required is issued when the security control center 2 determines that a domain name of the server in the domain name system request is a domain name that does not need to be accessed through a dynamic IP address.

The security control center 2 marks a domain name that is preset and internally recorded to indicate that the domain name does not need to be accessed through the dynamic IP address. After receiving the DNS request sent by the client security module 12, the security control center 2 returns an indication to the client security module 12 in response to the domain name corresponding to the DNS request being the marked domain name, to request the client security module 12 to forward the DNS request in the form of the normal data packet.

Based on the same technical concept, as shown in FIG. 11, an embodiment of the present invention further provides a terminal device including a memory 10 and a processor 20, and the memory 10 stores a computer program which, when executed by the processor 20, causes the processor 20 to perform the method for realizing network dynamics as described above.

Based on the same technical concept, an embodiment of the present invention further provides a computer readable storage medium storing a computer program which, when executed by a processor, causes the processor to perform the method for realizing network dynamics.

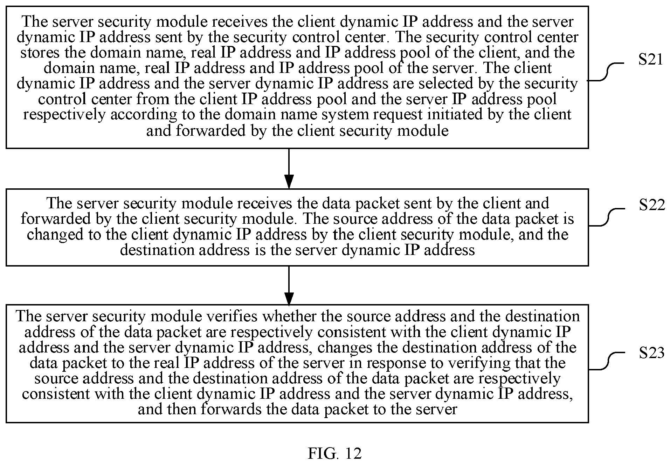

As shown in FIG. 12, another embodiment of the present invention further provides a method for realizing network dynamics which includes the following operations.

In S21, the server security module receives the client dynamic IP address and the server dynamic IP address sent by the security control center. The security control center stores the domain name, real IP address and IP address pool of the client, and the domain name, real IP address and IP address pool of the server. The client dynamic IP address and the server dynamic IP address are selected by the security control center from the client IP address pool and the server IP address pool respectively according to the domain name system request initiated by the client and forwarded by the client security module.

In S22, the server security module receives the data packet sent by the client and forwarded by the client security module. The source address of the data packet is changed to the client dynamic IP address by the client security module, and the destination address is the server dynamic IP address.

In S23, the server security module verifies whether the source address and the destination address of the data packet are respectively consistent with the client dynamic IP address and the server dynamic IP address, changes the destination address of the data packet to the real IP address of the server in response to verifying that the source address and the destination address of the data packet are respectively consistent with the client dynamic IP address and the server dynamic IP address, and then forwards the data packet to the server.

In an embodiment of the present embodiment, after the server receives the data packet, the method further includes the following operations.

The server sends a response packet. And the server security module changes the source address of the response packet to the server dynamic IP address, and forwards the response packet to the client security module. The destination address of the response packet is the client dynamic IP address, so that the client security module changes the destination address of the response packet to the real IP address of the client and forwards the response packet to the client.

Based on the same technical concept, as shown in FIG. 8, another embodiment of the present invention further provides a system for realizing network dynamics, including a security control center 2, a server security module 15, and a server 16. The security control center 2 stores a domain name, a real IP address and an IP address pool of the client, and a domain name, a real IP address and an IP address pool of the server.

The server security module 15 is configured to receive a client dynamic IP address and a server dynamic IP address sent by the security control center 2. The client dynamic IP address and the server dynamic IP address are selected by the security control center 2 from the client IP address pool and the server IP address pool respectively according to the domain name system request initiated by the client 11 and forwarded by the client security module 12.

The server security module 15 is further configured to receive a data packet sent by the client 11 and forwarded by the client security module 12. A source address of the data packet is changed by the client security module to the client dynamic IP address, and a destination address is the server dynamic IP address.

The server security module 15 is further configured to verify whether the source address and the destination address of the data packet are respectively consistent with the client dynamic IP address and the server dynamic IP address, and forward the data packet to the server in response to verifying that the source address and the destination address of the data packet are respectively consistent with the client dynamic IP address and the server dynamic IP address.

In another embodiment of this embodiment, the server security module 15 is provided with an address correspondence table and a forwarding control module.

The address correspondence table is configured to store a dynamic address pair assigned by the security control center 2.

The forwarding control module is configured to query whether an address pair consistent with the source address and the destination address of the data packet exists in the address correspondence table after receiving the data packet sent by the client security module 12, replace the destination address of the data packet with the real IP address of the server in response to the address pair consistent with the source address and the destination address of the data packet existing in the address correspondence table, and discard the data packet in response to the address pair consistent with the source address and the destination address of the data packet not existing in the address correspondence table.

In another embodiment of the present invention, the server security module 15 is further configured to change a destination address of a response packet to the client dynamic IP address after the server 16 receives the data packet and returns the response packet, and send the response packet to the client security module 12, so that the client security module changes the destination address of the response packet to the real IP address of the client after receiving the response packet and sends the response packet to the client 11.

In another embodiment of the present invention, the server security module 15 includes an address correspondence table and a forwarding control module.

The address correspondence table is configured to store a dynamic address pair assigned by the security control center 2.

The forwarding control module is configured to query whether an address pair consistent with the source address and the destination address of the data packet exists in the address correspondence table after receiving the data packet sent by the client security module 12, replace the destination address of the data packet with the real IP address of the server 16 in response to the address pair consistent with the source address and the destination address of the data packet existing in the address correspondence table, and discard the data packet in response to the address pair consistent with the source address and the destination address of the data packet not existing in the address correspondence table.

Based on the same technical concept, as shown in FIG. 11, an embodiment of the present invention further provides a terminal device including a memory 10 and a processor 20, and the memory 10 stores a computer program which, when executed by the processor 20, causes the processor 20 to perform the method for realizing network dynamics as described above.

Based on the same technical concept, an embodiment of the present invention further provides a computer readable storage medium storing a computer program which, when executed by a processor, causes the processor to perform the method for realizing network dynamics.

In the above embodiments of the present invention, the description of each embodiment has its own emphasis. For the part that is not detailed in one embodiment, please refer to the relevant description of other embodiments.

In addition, each functional unit in various embodiments of the present invention may be integrated into one processing unit, or each unit may exist physically alone, or two or more units may be integrated into one unit. The integrated unit may be implemented in the form of hardware or a software functional unit.

Those of ordinary skill in the art should appreciate that all or some of the steps in the method disclosed above and functional modules/units in the apparatus may be implemented as software, firmware, hardware, and appropriate combinations thereof. In a hardware implementation, partitioning between functional modules/units mentioned in the above description does not necessarily correspond to partitioning of physical components. For example, a physical component may have multiple functions, or a function or step may be performed by several physical components in cooperation. Some or all of the physical components may be implemented as software executed by a processor, such as a central processing unit, digital signal processor or microprocessor, or as hardware, or as an integrated circuit, such as an application-specific integrated circuit. Such software may be distributed over computer readable media, which may include computer storage media (or non-transitory media) and communication media (or transitory media). As known to those of ordinary skill in the art, the term 'computer storage medium' includes volatile and non-volatile, removable and non-removable media implemented in any method or technique for storing information, such as computer readable instructions, data structures, program modules or other data. Computer storage media include, but are not limited to, a random access memory (RAM), read only memory (ROM), electrically erasable programmable read-only memory (EEPROM), flash memory or other memory technologies, compact disc read-only memory (CD-ROM), digital versatile disk (DVD) or other optical disk storage, magnetic cassette, magnetic tape, magnetic disk storage or other magnetic storage devices, or any other media that may be used to store desired information and that may be accessed by a computer. Furthermore, as is well known to those of ordinary skill in the art, a communication medium typically contains computer readable instructions, data structures, program modules, or other data in a modulated data signal such as a carrier wave or other transmission mechanism, and may include any information delivery medium.

The method and system for realizing network dynamics, terminal device and computer readable storage medium provided in the embodiments of the present invention, by providing a security module and a security control center, enable the source IP address and the destination IP address to be dynamically changed when the virtual machine on the cloud computing platform accesses other virtual machines, and only data packets containing the dynamically changed source IP and destination IP are allowed to be sent to a target virtual machine. Therefore, when a hacker scans a network, he is unable to obtain an IP address accessible to a virtual machine, and is unable to access a virtual machine on the cloud computing platform, and therefore is unable to implement the attack. Even if the source and destination IP addresses are obtained through network packet capture, pairing to access the virtual machine is still unable to be realized, and therefore the attack is unable to be implemented. In addition, the DNS server does not need to be modified in the present invention, so that dynamics of the source address and destination address of the data packet is able to be realized, and all virtual machines on the entire cloud computing platform are able to be protected, thus playing a better protection role.

It should be understood that the above embodiments are merely exemplary embodiments used for explaining the principles of the present invention, and the present invention is not limited herein. For a person of ordinary skill in the art, various modifications and improvements may be made to without departing from the spirit and substance of the present invention, and these modifications and improvements are also regarded as the protection scope of the present invention.

## Claims

1. A method for realizing network dynamics, comprising:
a security module of a requester sending a domain name system request to a security control center after the requester initiates the domain name system request to access a requestee;
the security control center selecting an IP address from each of a stored dynamic address pool corresponding to the requester and a stored dynamic address pool corresponding to the requestee respectively as a dynamic source IP address and a dynamic destination IP address according to the domain name system request, and sending both the dynamic source IP address and the dynamic destination IP address to the security module of the requester and to a security module of the requestee;
the security module of the requester changing a source address of a data packet generated by the requester to the dynamic source IP address, and then sending the data packet to the security module of the requestee, wherein a destination address of the data packet is the dynamic destination IP address; and
the security module of the requestee verifying whether the source address and the destination address of the data packet are respectively consistent with the dynamic source IP address and the dynamic destination IP address after receiving the data packet; in response to verifying that the source address and the destination address of the data packet are respectively consistent with the dynamic source IP address and the dynamic destination IP address, the security module of the requestee changing the destination address of the data packet to a real IP address of the requestee and forwarding the data packet to the requestee; and in response to verifying that the source address of the data packet is inconsistent with the dynamic source IP address or the destination address of the data packet is inconsistent with the dynamic destination IP address, the security module of the requestee discarding the data packet.

2. The method according to claim 1, further comprising:
the security module of the requester receiving a response packet returned by the requestee and forwarded by the security module of the requestee, wherein a source address of the response packet is changed to the destination dynamic IP address by the security module of the requestee, and a destination address of the response packet is the dynamic source IP address; and
the security module of the requester changing the destination address of the response packet to a real IP address of the requester, and forwarding the response packet of which the destination address is changed to the requester.

3. The method according to claim 1, wherein after the requester initiates the domain name system request, the method further comprises:
the security module of the requester determining whether a domain name in the domain name system request is an external domain name; in response to determining that the domain name in the domain name system request is the external domain name, the security module of the requester forwarding the domain name system request to a server corresponding to a domain name system; and in response to determining that the domain name in the domain name system request is not the external domain name, the security module of the requester forwarding the domain name system request to the security control center.

4. The method according to claim 1, wherein after the security module of the requester forwarding the domain name system request to the security control center, the method further comprises:
in response to receiving an external domain name indication command issued by the security control center, the security module of the requester forwarding the domain name system request to a server corresponding to a domain name system; wherein the external domain name indication command is issued when the security control center determines that a domain name of the server in the domain name system request is an external domain name.

5. The method according to claim 1, wherein after the security module of the requester forwarding the domain name system request to the security control center, the method further comprises:
in response to receiving an indication command issued by the security control center that a server dynamic IP address is not required, the security module of the requester forwarding the domain name system request to a server corresponding to a domain name system; wherein the indication command that the server dynamic IP address is not required is issued when the security control center determines that a domain name of the server in the domain name system request is a domain name that does not need to be accessed through a dynamic IP address.

6. A system for realizing network dynamics, comprising: a security control center and a security module; wherein:
the security module is configured to send a domain name system request to the security control center after a requester initiates the domain name system request to access a requestee;
the security control center is configured to select an IP address from each of a stored dynamic address pool corresponding to the requester and a stored dynamic address pool corresponding to the requestee respectively as a dynamic source IP address and a dynamic destination IP address according to the domain name system request, and send both the dynamic source IP address and the dynamic destination IP address to the security module of the requester and to the security module of the requestee;
the security module is further configured to:
at the requester, change a source address of a data packet generated by the requester to the dynamic source IP address, and then send the data packet to the security module of the requestee, wherein a destination address of the data packet is the dynamic destination IP address; and
at the requestee, verify whether the source address and the destination address of the data packet are respectively consistent with the dynamic source IP address and the dynamic destination IP address after receiving the data packet sent by the security module of the requester; in response to verifying that the source address and the destination address of the data packet are respectively consistent with the dynamic source IP address and the dynamic destination IP address, change the destination address of the data packet to a real IP address of the requestee and forward the data packet to the requestee; and in response to verifying that the source address of the data packet is inconsistent with the dynamic source IP address or the destination address of the data packet is inconsistent with the dynamic destination IP address, discard the data packet.

7. A terminal device, comprising: a memory and a processor, wherein the memory stores a computer program which, when executed by the processor, causes the processor to perform the method for realizing network dynamics according to any one of claims 1 to 5.

8. A computer readable storage medium storing a computer program which, when executed by a processor, causes the processor to perform the method for realizing network dynamics according to any one of claims 1 to 5.
